# EUROPEAN PATENT APPLICATION

(11) **EP 1 536 623 A1**
(43) Date of publication of application: **01.06.2005**
(21) Application number: 04024053.3
(22) Date of filing: 08.10.2004
(51) Int. Cl.: H04M 7/00

(54) **Service selection in voice over IP networks providing geographic location information**

(30) Priority: 28.11.2003 JP 2003400898
(71) Applicant: Kabushiki Kaisha Toshiba, Tokyo 105-8001 (JP)
(72) Inventor: Kimura, Shingo, Minato-ku Tokyo 105-8001 (JP)
(74) Representative: Henkel, Feiler & Hänzel

(57) **Abstract**

A network telephone system includes a plurality of telephone terminals (IPT1 to IPT4) located in specific countries and districts respectively, a network (IPN) which connects the telephone terminals (IPT1 to IPT4) and transmits a plurality of voice packets, and a main apparatus (BT) connected to the network (IPN), and makes an exchange between the telephone terminals (IPT1 to IPT4), the telephone terminals (IPT1 to IPT4) each includes, a selector which selects at least one of the countries and districts, and an informing circuit to inform selection signal to the main apparatus (BT) together with identification information of self telephone terminal, the main apparatus (BT) includes a memory which stores information indicating the countries and districts correspondingly to the identification information, a reader which reads the information corresponding to identification information arrived from the telephone terminal via the network (IPN) from the memory, and a provider which provides services in according to read result and the selection signal to telephone terminal making a call.

## Description

The present invention relates to a network telephone system, which connects'IP (Internet Protocol) telephone terminals located in various countries and districts via a packet communication network. In addition, the present invention relates to the main apparatus and telephone terminal of the network telephone system.

In recent years, a network telephone system (IP telephone system) has come into wise use. According to the network telephone system, image and voice are bidirectional transmitted and received as packet data via a packet communication network in real time. According to the IP telephone system, voice communications are made between IP telephone terminals connected to the packet network. Of course, the voice communications are also made between telephone terminals connected to the IP telephone terminals and public network. In addition, the voice communications are made between various countries and districts via the packet communication network.

In the IP telephone system, time information preset in the main apparatus has been displayed on the display of the IP telephone terminal. However, according to the remote station form, time difference is generated between the IP telephone terminal and the main apparatus. For this reason, time indication suitable to each country and district is required.

In view of the foregoing circumstances, the following method has been proposed (e.g., JPN. PAT. APPLN. KOKAI Publications No. 2002-84371 and 2002-94702). According to the method, the time difference is offset between IP telephone terminals making a call through country or district to meet time information of the other end of the line.

However, the foregoing method has the problem described below. More specifically, time information of the other end making the call is displayed on the caller side only for the period when a call is being made through country or district. On the other hand, time information of the country or district of the caller is only displayed in the time other than the foregoing period. For example, a businessman from America temporarily stays in Japan, and he made a call to America using the IP telephone terminal in Japan. In this case, American standard time is not obtained until a calling state is given; for this reason, this is very inconvenient to the businessman from America.

If an emergency call is made from the IP telephone terminal located in the country different from the main apparatus, the call is interpreted as the emergency number on the country of the main apparatus; as a result, a troublesome problem happens.

It is, therefore, an object of the present invention to provide a network telephone system, which is capable of using services suitable to various countries or districts. Another object of the present invention is to provide the main apparatus and telephone terminal of the network telephone system.

According to an aspect of the present invention, there is provided a network telephone system comprising: a plurality of telephone terminals located in specific countries and districts respectively; a network which connects the telephone terminals and transmits a plurality of voice packets; and a main apparatus connected to the network, and makes an exchange between the telephone terminals, the telephone terminals each including: a selector which selects at least one of the countries and districts, to generate a selection signal; and an informing circuit to inform the selection signal to the main apparatus together with identification information of self telephone terminal; the main apparatus including: a memory which stores information indicating the countries and districts correspondingly to the identification information; a reader which reads the information corresponding to identification information arrived from the telephone terminal via the network from the memory, to generate a read result; and a provider which provides services in according to the read result and the selection signal to telephone terminal making a call.

According to another aspect of the present invention, there is provided a main apparatus used for a network telephone system comprising: a plurality of telephone terminals located in specific countries and districts respectively; a network connecting the telephone terminals and transmitting a plurality of voice packets; and a main apparatus connected to the network, and making an exchange between the telephone terminals, the main apparatus comprising: a memory which stores information indicating the countries and districts correspondingly to identification information indicating one of the telephone terminals; a reader which reads the information corresponding to the identification information arrived from one of the telephone terminals from the memory, to generate a read result, when the telephone terminal generates the identification information and a selection signal by selecting at least one of the countries and districts; and a provider which provides services in according to the read result and the selection signal to telephone terminal making a call.

According to yet another aspect of the present invention, there is provided a telephone terminal used for a network telephone system comprising: a plurality of telephone terminals located in specific countries and districts respectively; a network connecting the telephone terminals and transmitting a plurality of voice packets; and a main apparatus connected to the network, and making an exchange between the telephone terminals, the telephone terminal comprising: a selector which selects at least one of the countries and districts, to generate a selection signal; and an informing circuit to inform the selection signal to the main apparatus together with identification information of self telephone terminal.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a schematic view showing the configuration of an IP telephone system according to a first embodiment of the present invention;
FIG. 2 is a block diagram showing the functional configuration of an IP telephone main apparatus shown in FIG. 1;
FIG. 3 is a view showing storage contents of a country-district classification table in FIG. 2;
FIG. 4 is a view showing storage contents of an IP telephone terminal/country-district corresponding table shown in FIG. 2;
FIG. 5 is a view showing storage contents of a gateway/country-district corresponding table shown in FIG. 2;
FIG. 6 is a block diagram showing the functional configuration of an IP telephone terminal shown in FIG. 1;
FIG. 7 is a flowchart to explain the operation by the IP telephone main apparatus when updating time in the first embodiment;
FIG. 8 is a view to explain the connection operation in each call path in the first embodiment;
FIG. 9 is a flowchart to explain the operation by the IP telephone main apparatus when making a local call following an automatic path select code using an IP telephone terminal in the first embodiment;
FIG. 10 is a flowchart to explain the operation by the IP telephone main apparatus when making a long-distance call following an automatic path select code using the IP telephone terminal in the first embodiment;
FIG. 11 is a flowchart to explain the operation by the IP telephone main apparatus when making an international call following an automatic path select code using the IP telephone terminal in the first embodiment;
FIG. 12 is a flowchart to explain the operation by the IP telephone main apparatus when making an emergency call using an IP telephone terminal time in the first embodiment;
FIG. 13 is a schematic view showing the configuration of an IP telephone system according to a second embodiment of the present invention;
FIG. 14 is a block diagram showing the functional configuration of an IP telephone main apparatus shown in FIG. 13;
FIG. 15 is a schematic view showing the configuration of an IP telephone system according to a third embodiment of the present invention;
FIG. 16 is a table showing the corresponding relationship between node identifiers for identifying a USA node and countries and districts of GW used for making a call in gateways belonging to the USA node; and
FIG. 17 is a flowchart to explain the operation by the IP telephone main apparatus when a node identifier dials up using an IP telephone terminal.

Embodiments of the present invention will be described below with reference to the accompanying drawings.

### (First embodiment)

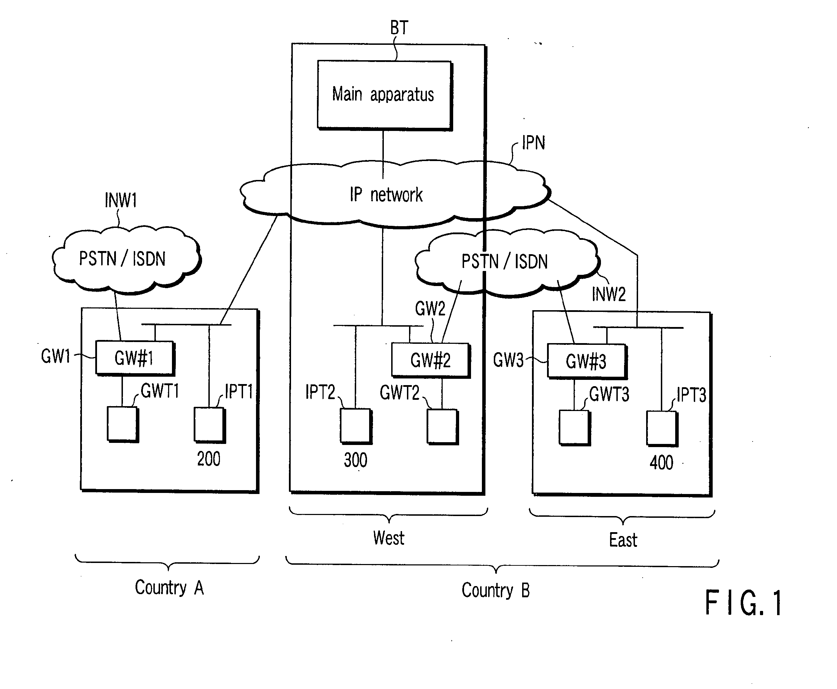

FIG. 1 is a schematic view showing the configuration of an IP telephone system according to a first embodiment of the present invention.

According to the IP telephone system, IP telephone terminal IPT1 and gateway GW1, IPT2 and GW2, IPT3 and GW3 are located in a country A, the West of a country A and the East thereof, respectively. In addition, a main apparatus BT is located in the East of the country B. The IP telephone terminals IPT1 to IPT3 and gateways GW1 to GW3 are connected to the main apparatus BT via an IP network IPN.

The gateway GW1 is connected a public network INW1 and a known telephone terminal GWT1. The gateway GW2 is connected a public network INW2 and a known telephone terminal GWT2. The gateway GW3 is connected a public network INW2 and a known telephone terminal GWT3.

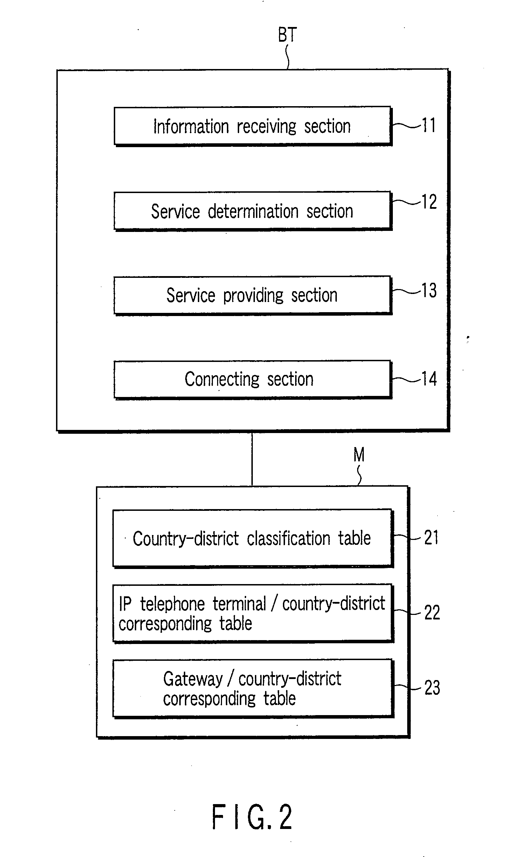

FIG. 2 is a block diagram showing the functional configuration of the main apparatus BT.

The main apparatus BT has a function of exchanging and connecting the foregoing IP telephone terminals IPT1 to IPT3 and gateways GW1 to GW3. In addition, the main apparatus BT includes several sections given below. One is an information receiving section 11 (hereinafter, referred to as receiving section 11). Another is a service determination section 12 (hereinafter, referred to as determination section 12). Another is a service providing section 13 (hereinafter, referred to as providing section 13). Another is a connecting section 14.

The main apparatus BT is further connected with a memory M. The memory M is provided with the following tables. One is a country-district classification table 21 (hereinafter, referred to as table 21). Another is an IP telephone terminal/country-district corresponding table (hereinafter, referred to as table 22). Another is a gateway/country-district corresponding table (hereinafter, referred to as table 23).

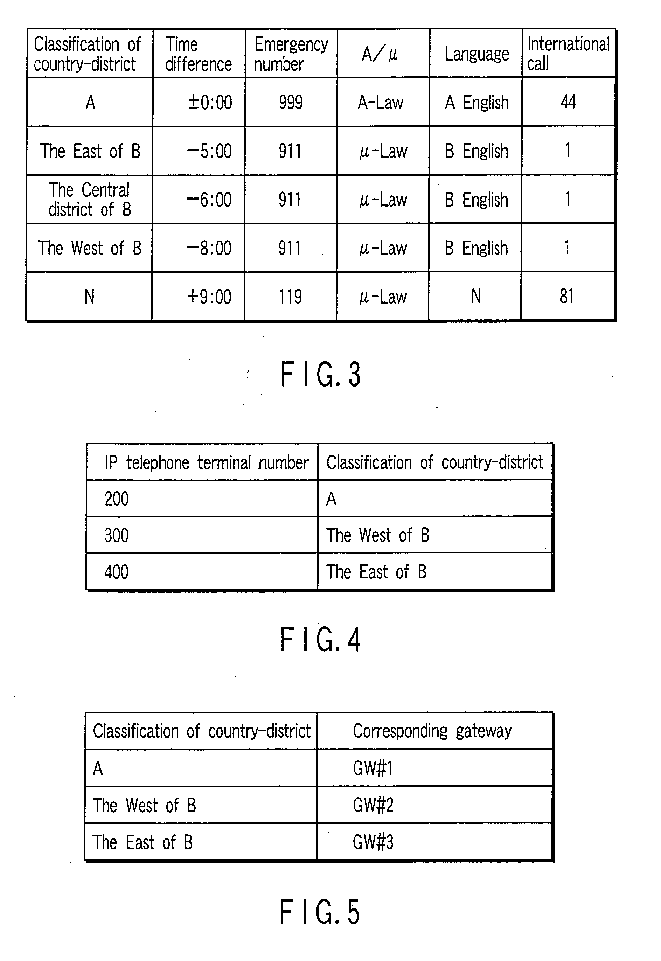

As shown in FIG. 3, the table 21 is stored with service contents for each country-district. For example, the service contents are time difference from the standard time (Greenwich time), emergency number, A-Law/µ-Law classification, language, and country codes in international telephone.

As depicted in FIG. 4, the table 22 is stored with data showing the corresponding relationship between phone numbers of IP telephone terminals IPT1 to IPT3 and country-district.

As seen from FIG. 5, the table 23 is stored with data showing the corresponding relationship between identification phone numbers of gateways GW1 to GW3 and country-district.

The receiving section 11 receives phone number and selected country-district information, which are sent from the IP telephone terminal IPT1.

The determination section 12 reads the country-district information corresponding to the sent phone number from the table 22. Thereafter, the section 12 determines service contents to be provided based on the country-district information.

The providing section 13 provides a service suitable to the country-district associated by the IP telephone terminal IPT1 based on the foregoing determination. In this case, the providing section 13 provides at least one of the following services to the IP telephone terminal IPT1 based on the table 21 shown in FIG. 3. One is a service of displaying time information corresponding to the selected country-district. Another is an emergency number service corresponding to the selected country-district.
Another is a voice signal service using coding corresponding to the selected country-district.
Another is a voice recognition service corresponding to the selected country-district. Another is an international call service.

The connecting section 14 connects the telephone terminal IPT1 of a caller via the IP network IPN, the gateway GW3 belonging to the specified one of country-district and the network INW2 based on the table 23, when a connection request is made from the IP telephone terminal IPT1 to an external terminal of the network INW1 of the specified one of countries and districts.

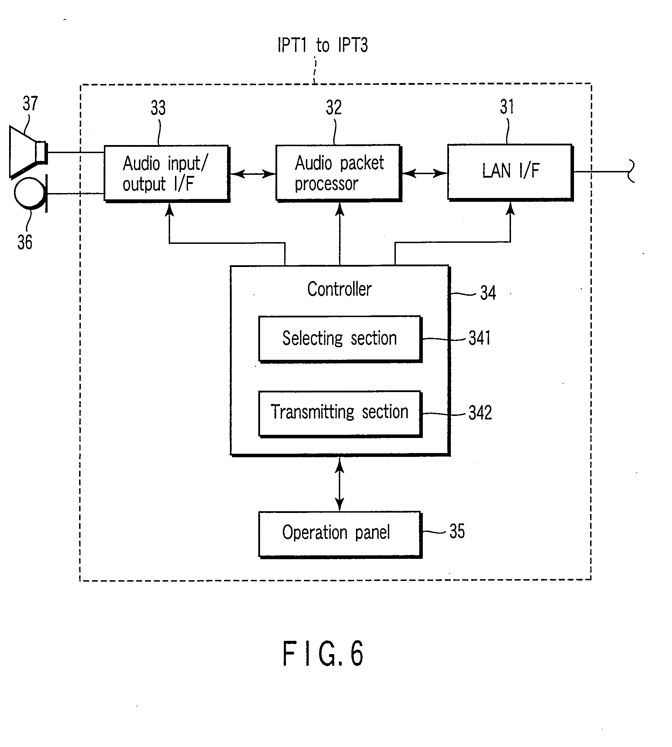

As FIG. 6 shows, each of the IP telephone terminals IPT1 to IPT3 comprises a LAN interface (I/F) 31, an audio packet processor 32, an audio input/output interface (I/F) 33, a controller 34, and an operation panel 35.

The LAN interface 31 receives and transmits various data items from and to the IP network IPN.
That is, the LAN interface 31 extracts an audio packet and control data from the packets transferred from the IP network IPN. The audio packet and control data are supplied to the audio data processor 32 and the controller 34, respectively. The LAN interface 31 multiplexes the data items supplied from the controller 34 with the audio packet supplied from the audio packet processor 32, generating multiplex data. The multiplex data is transmitted from the LAN interface 31 to the IP network IPN.

The audio packet processor 32 receives an audio packet from the LAN interface 31 and converts the audio packet into an analog received audio signal. The analog received audio signal is supplied to the audio input/output interface 33. Further, the audio packet processor 32 receives an audio signal to be transmitted, from the audio input/output interface 33, and converts this audio signal into an audio packet that can be easily transferred in the IP network IPN. The audio packet is supplied to the LAN interface 31.

A microphone 36 and a speaker 37 are connected to the audio input/output interface 33. The audio input/output interface 33 receives an audio signal transmitted from the microphone 36 and supplies the same to the audio packet processor 32. The interface 33 also receives an audio signal from the audio packet processor 32, amplifies this signal, and supplies the signal to the speaker 37. The speaker 37 generates a speech from the audio signal.

The controller 34 comprises a CPU, a ROM and a RAM. The controller 34 executes programs (software) to control the other components and serves to achieve the communication between the IP telephone terminals IPT1 to IPT3 and the main apparatus BT via the IP network IPN.

The operation panel 35 has an input device and a display. The input device may be a group of key switches. The display may be an LCD. The user operates the operation panel 35 to input various instructions to the controller 34. Under the control of the controller 34, various information items are given to the user.

The controller 34 comprises a selecting section 341 and a transmitting section 342. The selecting section 341 selects at least one of the countries and districts, to generate a selection signal. The transmitting section 342 transmits the selection signal to the main apparatus BT together with identification information of self telephone terminal.

Various operations of the system having the foregoing configuration will be explained below.

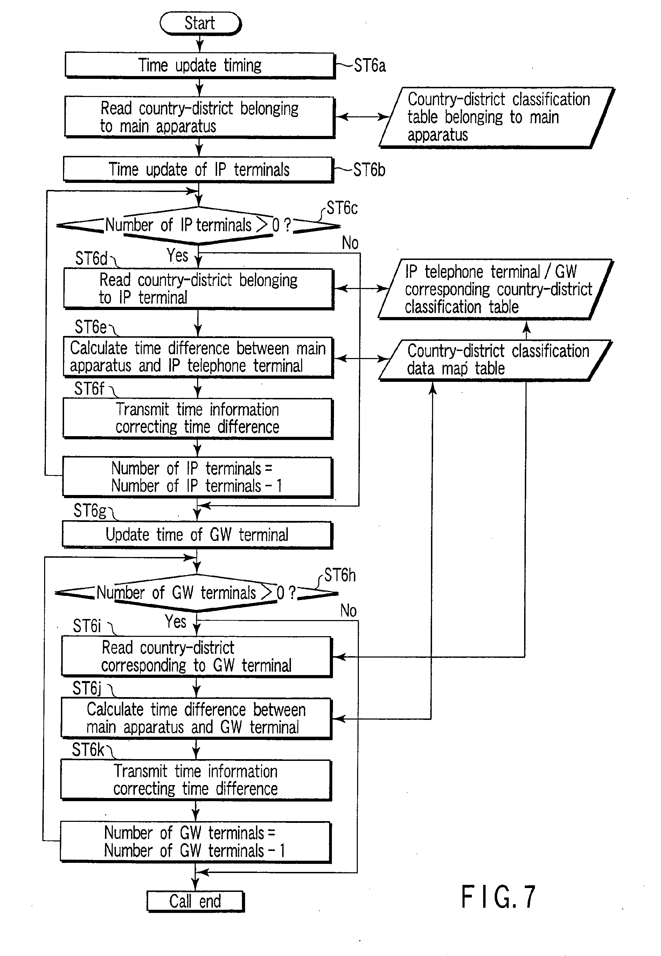

FIG. 7 is a flowchart to explain the operation by the main apparatus BT when updating time.

In step ST6a, the main apparatus BT periodically updates the current time information of all IP telephone terminals IPT1 to IPT3 (step ST6b). When giving the updated time information, the main apparatus BT confirms whether or not IP telephone terminals IPT1 to IPT3 exits (step ST6c). Thereafter, the main apparatus BT reads the country-district classification belonging to each of the IP telephone terminals IPT1 to IPT3 (step ST6d). The main apparatus BT makes reference to the table 21 to calculate a relative time difference between the self country-district classification and these IP telephone terminals (step ST6e).

The main apparatus BT adds or subtracts the time difference to or from the self local time, and gives the results as time information to each of the IP telephone terminals IPT1 to IPT3 (step ST6f). For example, if the local time of the main apparatus BT is 12:00, the time difference from the IP telephone terminal IPT3 (belonging to the East of US) is -3:00. (In other words, the main apparatus is delayed for three hours.) The main apparatus BT gives time information of 15:00 to the IP telephone terminal IPT3. On the other hand, the same operation as described above is carried out with respect to telephone terminals GWT1 to GWT3 connected to gateways GW1 to GW3. More specifically, the main updates the current time information of all telephone terminals GWT1 to GWT3 based on country-district classification belonging to the connected gateways GW1 to GW3 (step ST6g). When giving the updated time information, the main apparatus BT confirms whether or not telephone terminals GWT1 to GWT3 exits (step ST6h). Thereafter, the main apparatus BT reads the country-district classification belonging to gateways GW1 to GW3, which are connected with the telephone terminals GWT1 to GWT3 (step ST6i). The main apparatus BT makes reference to the table 21 to calculate a relative time difference between the self country-district classification and these IP telephone terminals (step ST6j).

The main apparatus BT adds or subtracts the time difference to or from the self local time, and gives the results as time information to each of the telephone terminals GWT1 to GWT3 (step ST6k).

The optimum call path of the foregoing system will be explained below.

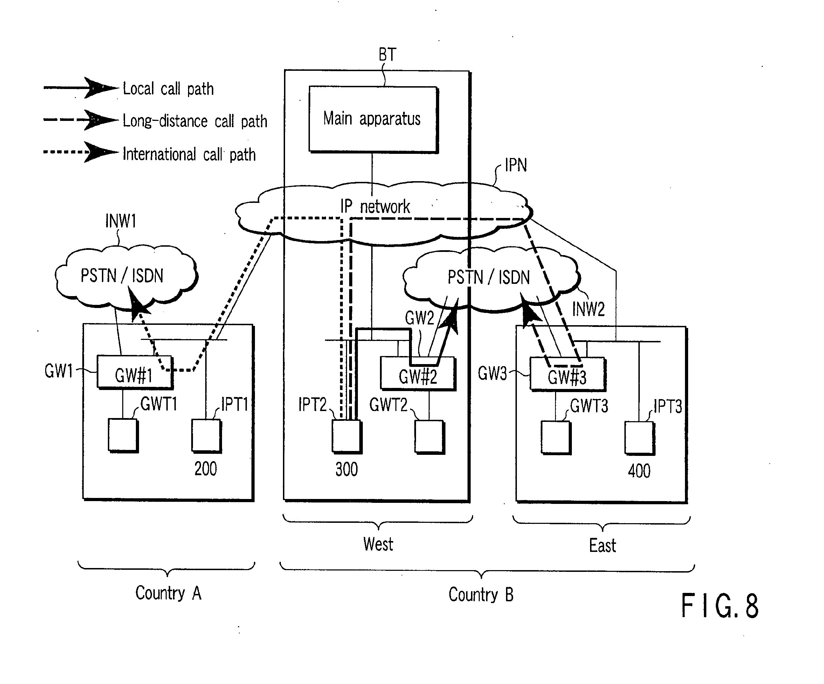

FIG. 8 is a view to explain the connection operation in each call path.

For example, the IP telephone terminal IPT2 belonging to the west district of the country B makes local call, long-distance call to the east district of the country B, and international call to the country A.

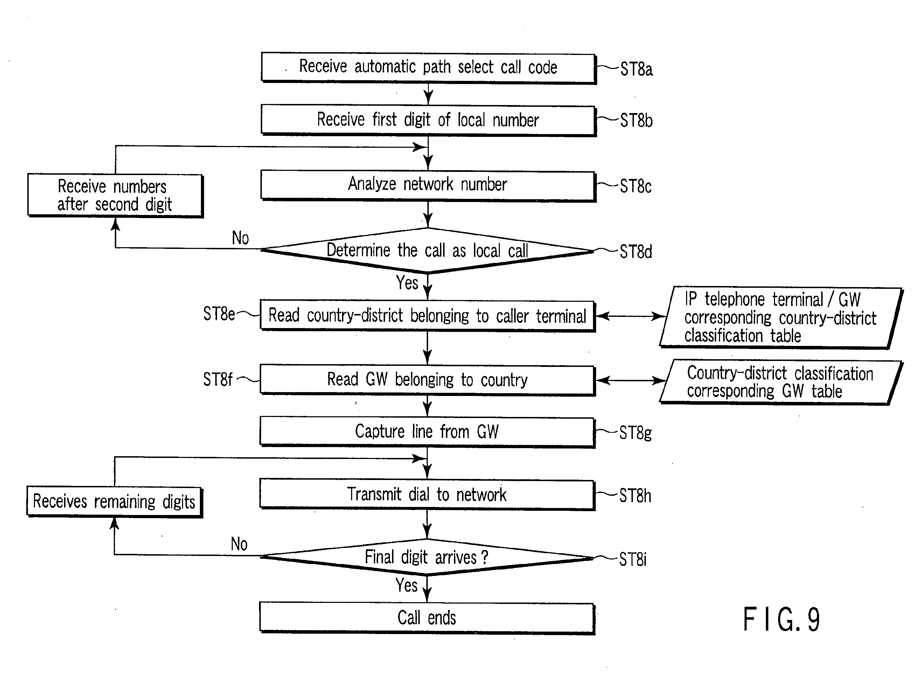

FIG. 9 is a flowchart to explain the operation by the main apparatus BT when making a local call following an automatic path select code using the IP telephone terminal IPT2.

When the IP telephone terminal IPT2 makes a local call following the automatic path select code, the main apparatus BT makes the following operation via steps ST8a and ST8c. More specifically, the main apparatus BT analyzes the dial number of the IP telephone terminal IPT2, and determines that the call is a local call (step ST8d). Then, the main apparatus BT reads the country-district classification belonging to the IP telephone terminal IPT2 from the table 22 (step ST8e). Further, the main apparatus BT reads the gateway number belonging to the same country-district as the IP telephone terminal IPT2 from the table 23 (step ST8f).

The main apparatus BT selects and captures a circuit line from a public network line included in the selected gateway GW2 (step ST8g), and transmits a call dial (step ST8h and step ST8i).

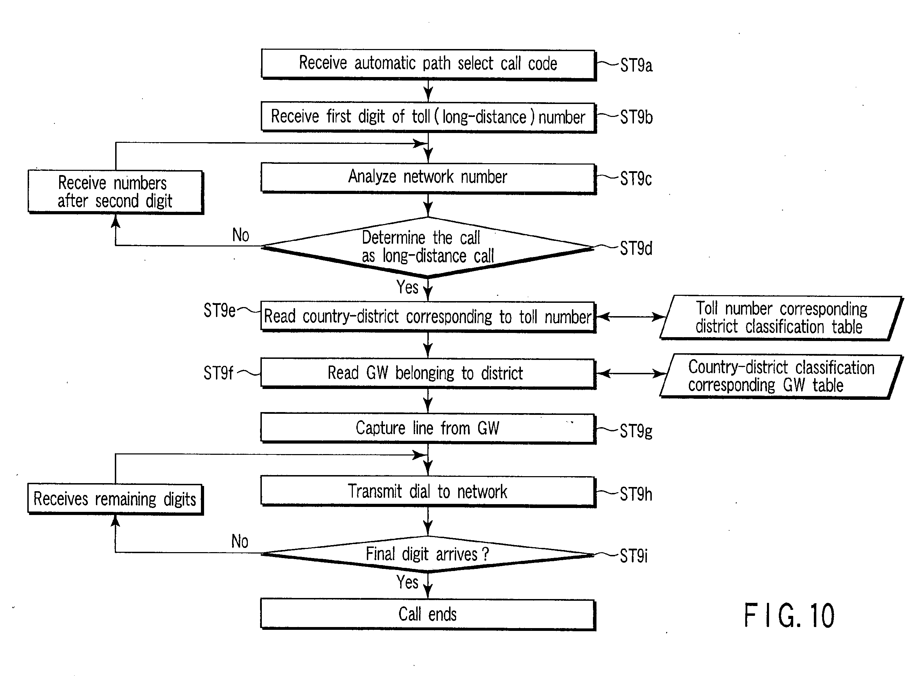

FIG. 10 is a flowchart to explain the operation by the main apparatus BT when making a long-distance call following an automatic path select code using the IP telephone terminal IPT2.

When the IP telephone terminal IPT2 makes a toll (long-distance) call following the automatic path select code, the main apparatus BT makes the following operation via steps ST9a and ST9c. More specifically, the main apparatus BT analyzes the dial number of the IP telephone terminal IPT2, and determines that the call is a long-distance call (step ST9d). The main apparatus BT determines the country-district belonging to the toll number district from a toll number.

Then, the main apparatus BT reads the country-district classification belonging to the IP telephone terminal IPT2 from the table 22 (step ST9e). Further, the main apparatus BT reads the gateway number belonging to the determined country-district from the table 23 (step ST9f).

The main apparatus BT selects and captures a circuit line from a public network line included in the selected gateway (step ST9g), and transmits a call dial (step ST9h and step ST9i).

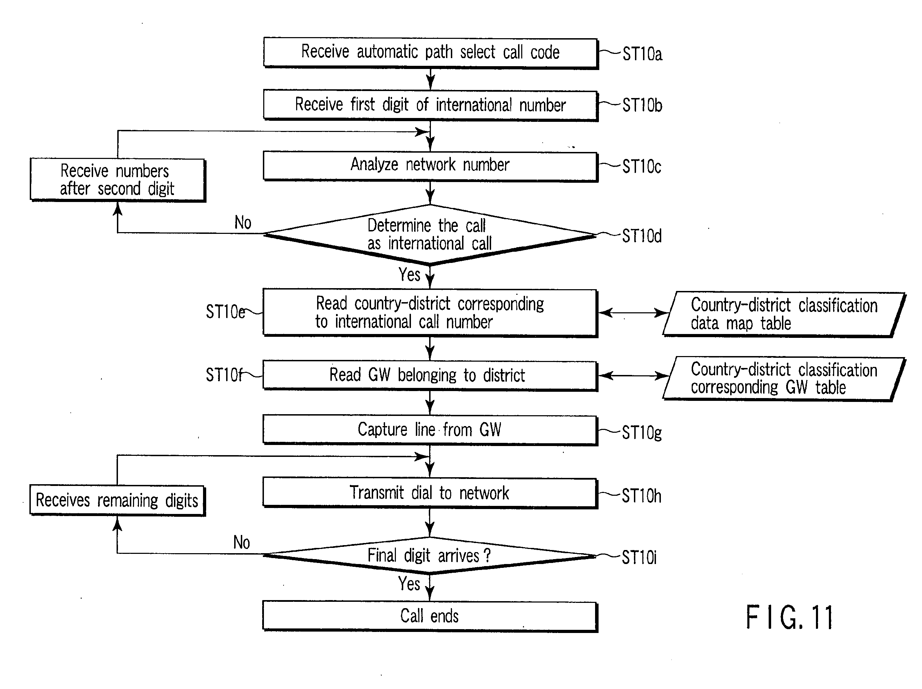

FIG. 11 is a flowchart to explain the operation by the main apparatus BT when making an international call following an automatic path select code using the IP telephone terminal IPT2.

When the IP telephone terminal IPT2 makes an international call following the automatic path select code, the main apparatus BT makes the following operation via steps ST10a and ST10c. More specifically, the main apparatus BT analyzes the dial number of the IP telephone terminal IPT2, and determines that the call is an international call (step ST10d). The main apparatus BT determines the country-district belonging to the caller from the country code.

Then, the main apparatus BT reads the country-district classification belonging to the IP telephone terminal IPT2 from the table 22 (step ST10e). Further, the main apparatus BT reads the gateway number belonging to the country-district determined from the country code from the table 23 (step ST10f).

The main apparatus BT selects and captures a circuit line from a public network line included in the selected gateway (step ST10g), and transmits a call dial (step ST10h and step ST10i).

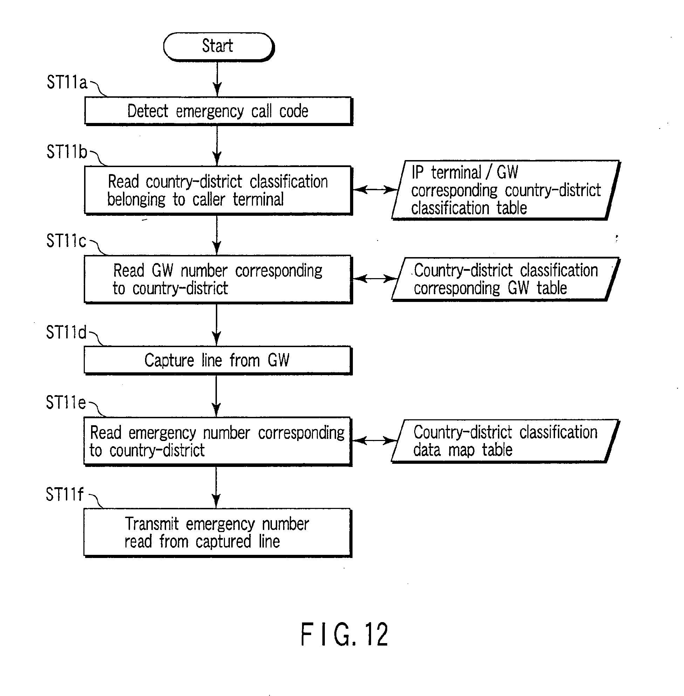

FIG. 12 is a flowchart to explain the operation by the main apparatus BT when making an emergency call using the IP telephone terminal IPT2.

When the IP telephone terminal IPT2 makes an emergency call, the main apparatus BT detects an emergency call code (step ST11a). The main apparatus BT reads the country-district classification belonging to the IP telephone terminal IPT2 from the table 22 (step ST11b). Further, the main apparatus BT reads the gateway number belonging to the same country-district as the country-district classification belonging to the IP telephone terminal IPT2 from the table 23 (step ST10c).

The main apparatus BT selects and captures a circuit line from a public network line included in the selected gateway (step ST11d), and reads the emergency number corresponding to the country-district from the table 21 (step ST11e). Thereafter, the main apparatus BT transmits the emergency call number via the captured line (step ST11f).

According to the first embodiment, when the IP telephone terminal IPT2 makes local call, long-distance call, international call and emergency call, the main apparatus BT provides services based the country-district previously associated with the IPT2. Therefore, the user of the IP telephone terminal IPT2 can receive a service suitable to a desired country-district.

According to the first embodiment, when the IP telephone terminal IPT2 makes voice communications through country-district, the main apparatus BT selects the lowest fee route. Therefore, the user of the IP telephone terminal IPT2 can receive the optimum service at the lowest fee.

### (Second embodiment)

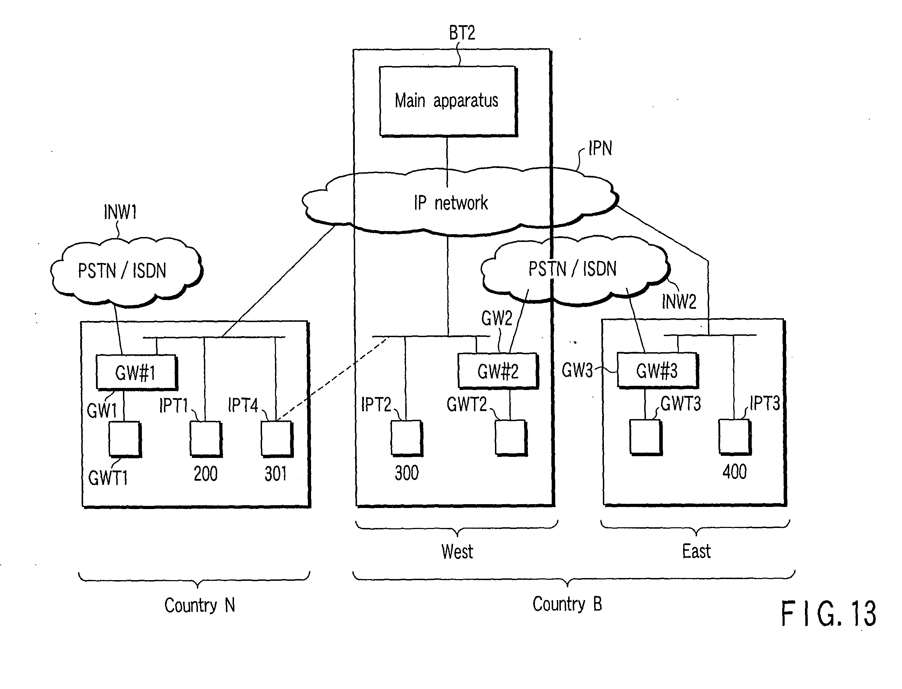

FIG. 13 is a schematic view showing the configuration of an IP telephone system according to a second embodiment of the present invention. In FIG. 13, the same reference numerals are used to designate parts identical to FIG. 1, and the details are omitted.

The IP telephone system is connected with one gateway GW1, telephone terminal GWT1, IP telephone terminals IPT1 and IPT4 in a country N. The country-district classification of the foregoing gateway GW1, IP telephone terminals IPT1 and IPT4 is registered as "country N". For example, when normal local call and long-distance call are made, the gateway GW1 is selected as the capture line.

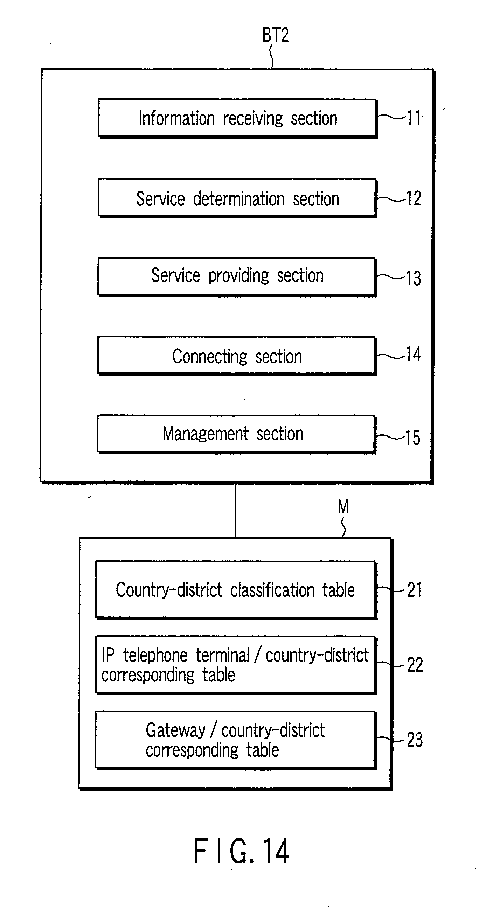

FIG. 14 is a block diagram showing the functional configuration of the main apparatus BT2. In FIG. 14, the same reference numerals are used to designate parts identical to FIG. 2, and the details are omitted.

The main apparatus BT2 has a management section 15. The management section 15 manages IP telephone terminal IPT4 belonging to country N correspondingly to the West of country B.

For example, a businessman visits a branch of the country N from the main office located in the West of the country B for a short term. The businessman does work while making contact with a customer in the West of the country B. In this case, the businessman makes a call to the customer using the telephone terminal GWT1 located in the branch of the country N in the same manner as done in the main office. However, if the businessman dials the customer's phone number (local call), the telephone terminal GWT1 located in the country N regards the gateway GW1 as local gateway (capturing a line in public network call). For this reason, the call made by the businessman is treated as a call in the country N.

In order to solve the foregoing problem, the following means are proposed. One is to make a call designating a call GW number before dial (GW designation call), and another is to make an international call (to country B). However, these means are lack for usability. In view of the foregoing circumstances, an IP telephone terminal IPT4 for guest is newly registered (or the terminal using in the branch of the country N is converted into IP telephone terminal use). Further, the corresponding country-district classification of the IP telephone terminal IPT4 is set as "the West of the country B". By doing so, the IP telephone terminal IPT4 functions as an IP telephone terminal connected to the network of the main office in the West of the country B although connected to an IP network IPN of the branch of the country N. More specifically, the language displayed on LCD is a language used in the country B, the calendar time is the local time of the West thereof, and the corresponding gateway is the gateway GW2.

According to the second embodiment, the main apparatus BT2 manages the IP telephone terminal IPT4 so that the corresponding country-district classification is set as "the West of the country B". By doing so, when making a call to the customer in the West of the country B, the businessman only dials the local number as usual using the IP telephone terminal IPT4. The main apparatus BT2 selects a line captured from the corresponding country-district classification of the caller terminal in a local call from gateways belonging to the terminal. The calendar time displayed on the LCD is the local time of the West of the country B; therefore, there is no need of calculating the time difference between the customer and the businessman.
(In other words, the businessman can directly see the local time of the customer.)

### (Third embodiment)

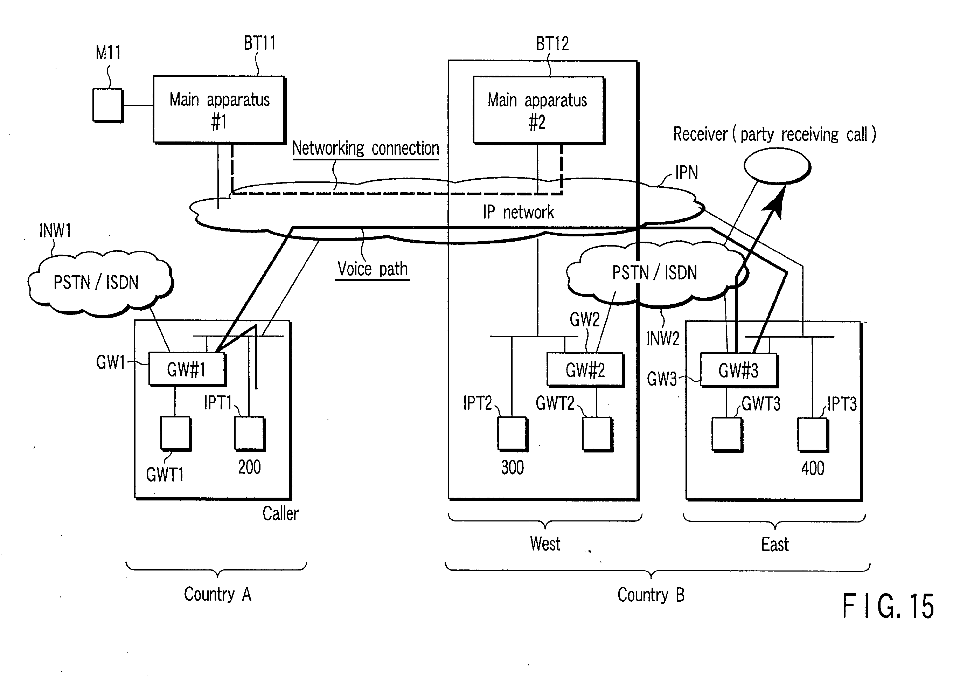

FIG. 15 is a schematic view showing the configuration of an IP telephone system according to a third embodiment of the present invention. In FIG. 15, the same reference numerals are used to designate parts identical to FIG. 1, and the details are omitted.

According to the IP telephone system, the IP network IPN is connected with two main apparatuses BT11 and BT12. The foregoing main apparatuses BT11 and BT12 are connected with each other using a dedicated line, and services are provided through both main apparatuses BT11 and BT12 (calling networking service).

For example, the IP telephone terminal IPT1 located in the country A makes a call to an external terminal connected to a public line network INW2 of the country B. In this case, the main apparatus BT11 of the country A has no gateway for the public network INW2 in the country B. For this reason, the main apparatus BT11 makes a call via the main apparatus BT12 of the country B. In the conventional case, the main apparatus BT11 dials a node identifier, and thereafter, dials automatic line select number and destination number.

However, the IP telephone terminal IPT1 belonging to the main apparatus BT11 of the country A is not registered as data in the main apparatus BT12 of the country B. For this reason, the main apparatus BT11 can not specify a gateway number used for capturing the public line INW2.

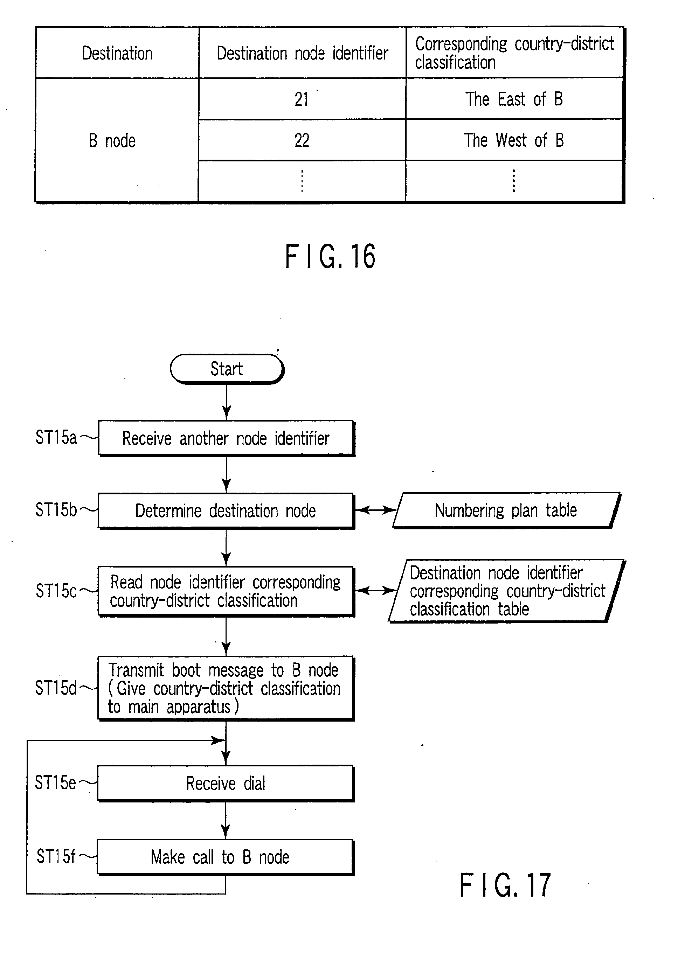

In order to solve the foregoing problem, a memory M11 provided the main apparatus BT11 is stored with the following table shown in FIG. 16. In the table, there is shown a country-district classification belonging to GW used for a call corresponding to a node identifier for identifying the B country node in gateways belonging to the B country node.

FIG. 17 is a flowchart to explain the operation by the main apparatus BT11 when a node identifier dials up using the IP telephone terminal IPT1.

The IP telephone terminal IPT1 dials up the node identifier of the country B node via the country A node (step ST15a). The main apparatus BT11 determines the country B node as the destination (step ST15b). Then, the main apparatus BT11 reads the country-district classification corresponding to the destination node identifier (step ST15c). The main apparatus BT11 gives the read country-district classification to the main apparatus BT12 of the country B node (step ST15d). Further, the main the main apparatus BT11 gives the dial information received from the IP telephone terminal IPT1 to the main apparatus BT12 of the country B node (step ST15e and step ST15f).

Thereafter, in the main apparatus BT2, an automatic line select function boots using the country B node by the automatic line select number. In this case, number analysis is made based on the given country-district classification, and a ling for making a call to the public network is selected.

According to the third embodiment, the IP network IPN is provided with two main apparatuses BT11 and BT12, and correspondence between country-district and these main apparatuses BT11 and BT12 is made. By doing so, if each country and district use one system in common, it is possible to specify main apparatus BT11, BT12 used for each country and district. Thus, load given to one main apparatus is shared into two main apparatuses BT11 and BT12. In addition, services used via each of IP telephone terminals IPT1 to IPT3 are clarified.

### (Other embodiment)

The present invention is not limited to the foregoing embodiments. According to the embodiments, when making a call through country or district, services suitable to the country or district are provided. For example, if the time of the IP telephone terminal is changed from the country N to the country B, it may be set to the local time of the country B by receiving time information from the main apparatus.

Besides, various changes may be made within a range without diverging from the subject matter of the present invention. More specifically, various changes are possible in the configuration of the IP telephone system, the kind and configuration of the IP telephone terminal, service contents for each country-district and the procedure of using the services.

## Claims

1. A network telephone system **characterized by** comprising:
a plurality of telephone terminals (IPT1 to IPT3) located in specific countries and districts respectively;
a network (IPN) which connects the telephone terminals (IPT1 to IPT3) and transmits a plurality of voice packets; and
a main apparatus (BT) connected to the network(IPN), and makes an exchange between the telephone terminals (IPT1 to IPT3),
the telephone terminals (IPT1 to IPT3) each including:
means (341) for selecting at least one of the countries and districts, to generate a selection signal; and
means (342) for informing the selection signal to the main apparatus (BT) together with identification information of self telephone terminal;
the main apparatus (BT) including:
means (22) for storing information indicating the countries and districts correspondingly to the identification information;
means (12) for reading the information corresponding to identification information arrived from the telephone terminal via the network (IPN) from the memory (22), to generate a read result; and
means (13) for providing services in according to the read result and the selection signal to telephone terminal making a call.

2. The system according to claim 1, **characterized in that** the means (13) for providing provides at least one of the following services to the telephone terminal making a call, and the services includes: service of displaying time information corresponding to the selected one of countries and districts; emergency number service corresponding to the selected one of countries and districts; voice signal service using coding corresponding to the selected one of countries and districts; voice recognition service corresponding to the selected one of countries and districts and international call service corresponding to the selected one of countries and districts.

3. The system according to claim 1, **characterized by** further comprising:
a plurality of communication apparatuses (GW1 to GW3) located in specific countries and districts respectively, and connecting the network (IPN) with another network (INW1, INW2) transmitting a voice signal, and further, making conversion from the voice packets to the voice signal and conversion from the voice signal to the voice packets,
the main apparatus (BT) further including:
means (23) for storing a information indicating the countries and districts correspondingly to apparatus identification information allocated to the communication apparatuses respectively; and
means (14) for connecting a telephone terminal (IPT1) of a caller via the network (IPN), a communication apparatus (GW1 to GW3) belonging to the specified one of countries and districts and the another network (INW1,INW2), when a connection request is made from the telephone terminal (IPT1 to IPT3) to an external terminal of the another network (INW1, INW2) of the specified one of countries and districts.

4. The system according to claim 1, **characterized in that** the main apparatus (BT2) further includes,
means (15) for managing at least one of telephone terminals belonging to one of the countries and districts correspondingly to a information indicating other one of the countries and districts.

5. The system according to claim 1, when a plurality of main apparatuses (BT11,BT12) are given,
**characterized by** further comprising:
means (M11) for storing data indicating the corresponding relationship between the main apparatuses (BT11,BT12) and telephone terminals (IPT1 to IPT3).

6. A main apparatus (BT) used for a network telephone system **characterized by** comprising: a plurality of telephone terminals (IPT1 to IPT3) located in specific countries and districts respectively; a network (IPN) connecting the telephone terminals (IPT1 to IPT3) and transmitting a plurality of voice packets; and a main apparatus (BT) connected to the network (IPN), and making an exchange between the telephone terminals (IPT1 to IPT3),
the main apparatus (BT) comprising:
means (22) for storing information indicating the countries and districts correspondingly to identification information indicating one of the telephone terminals (IPT1 to IPT3);
means (12) for reading the information corresponding to the identification information arrived from one of the telephone terminals (IPT1 to IPT3) from the means for storing, to generate a read result, when the telephone terminal (IPT1) generates the identification information and a selection signal by selecting at least one of the countries and districts; and
means (13) for providing services in according to the read result and the selection signal to telephone terminal (IPT1) making a call.

7. The apparatus according to claim 6,
**characterized in that** the means (13) for providing provides at least one of the following services to the telephone terminal (IPT1) making a call, and the services includes: service of displaying time information corresponding to the selected one of countries and districts; emergency number service corresponding to the selected one of countries and districts; voice signal service using coding corresponding to the selected one of countries and districts; voice recognition service corresponding to the selected one of countries and districts and international call service corresponding to the selected one of countries and districts.

8. The apparatus according to claim 6, when the system includes a plurality of communication apparatuses (GW1 to GW3) located in specific countries and districts respectively, and connecting the network (IPN) with another network (INW1, INW2) transmitting a voice signal, and further, making conversion from the voice packets to the voice signal and conversion from the voice signal to the voice packets,
**characterized by** further comprising:
means (23) for storing a information indicating the countries and districts correspondingly to apparatus identification information allocated to the communication apparatuses respectively; and
means (14) for connecting a telephone terminal (IPT1) of a caller via the network (INW1, INW2), a communication apparatus (GW1 to GW3) belonging to the specified one of countries and districts and the another network, when a connection request is made from the telephone terminal to an external terminal of the another network (INW1, INW2) of the specified one of countries and districts.

9. The apparatus according to claim 6,
**characterized by** further comprising,
means (15) for managing at least one of telephone terminals (IPT1 to IPT4) belonging to one of the countries and districts correspondingly to a information indicating other one of the countries and districts.

10. A telephone terminal used for a network telephone system **characterized by** comprising: a plurality of telephone terminals (IPT1 to IPT4) located in specific countries and districts respectively; a network (IPN) connecting the telephone terminals (IPT1 to IPT4) and transmitting a plurality of voice packets; and a main apparatus (BT) connected to the network (IPN), and making an exchange between the telephone terminals (IPT1 to IPT4),
the telephone terminal comprising:
means (341) for selecting at least one of the countries and districts, to generate a selection signal; and
means (342) for informing the selection signal to the main apparatus (BT) together with identification information of self telephone terminal.
